# FASCICULE DE BREVET EUROPEEN

(11) **EP 3 482 117 B1**
(45) Date de publication et mention de la délivrance du brevet: **13.05.2020**
(21) Numéro de dépôt: 17734355.5
(22) Date de dépôt: 04.07.2017
(51) Int. Cl.: F16L 37/091, F16L 21/02, F16L 21/03, F16L 37/02, F16L 25/10

(54) **ÉLÉMENT DE CIRCUIT À INSERTION D'INSERT FACILITÉ**
SCHALTUNGSELEMENT MIT EINFACHEM EINLEGEN
CIRCUIT ELEMENT WITH EASY INSERT INSERTION

(30) Priorité: 07.07.2016 FR 1656554
(43) Date de publication de la demande: 15.05.2019
(73) Titulaire: Parker Hannifin Emea S.A.R.L., 1163 Etoy (CH)
(72) Inventeur: LE QUERE, Philippe, 35830 Betton (FR)
(74) Mandataire: Lavialle, Bruno François Stéphane
(86) Numéro de dépôt international: PCT/EP2017/066686
(87) Numéro de publication internationale: WO 2018/007410

(56) Documents cités:
- DE-A1- 19 843 310
- FR-A1- 2 729 736

## Description

La présente invention concerne les circuits de transport de fluide tel qu'un circuit pneumatique, un circuit hydraulique, un circuit de transport d'un liquide alimentaire, ou autre.

Un tel circuit comprend généralement des tubes reliés, par des dispositifs de raccordement, à des éléments émetteurs et/ou récepteurs de fluide comme, des distributeurs, des capteurs, des régulateurs de pressions ou de débits, des actionneurs...

Il est connu des dispositifs de raccordement comprenant un insert tubulaire pourvu extérieurement de moyens de son ancrage dans une portion d'extrémité d'un canal ménagé dans le corps de l'élément et pourvu intérieurement de moyens de retenue étanche d'une extrémité de tube de manière à réaliser le raccordement du tube au canal de l'élément. Le document FR2729736 décrit un tel élément de circuit de fluide.

Deux modes d'ancrage sont couramment utilisés. Selon un premier mode d'ancrage, les moyens d'ancrage comprennent des dents rigides formées sur la surface extérieure de l'insert. Ce mode d'ancrage permet la réalisation des moyens d'ancrage en une seule pièce avec l'insert tubulaire, ce qui est économique, et assure un ancrage particulièrement efficace compte-tenu des contraintes exercées par les dents rigides sur le matériau constituant le corps de l'élément dans lequel est ménagé le puits. Toutefois, le matériau doit être suffisamment résistant mécaniquement pour pouvoir supporter ces contraintes dans le temps. C'est généralement le cas lorsque le corps est réalisé en un matériau plastique semi-cristallin. En revanche, l'utilisation de ce mode d'ancrage est délicate en combinaison avec des matériaux plastiques amorphes qui risquent de céder sous ces contraintes. Un deuxième mode d'ancrage est plus particulièrement adapté pour de tels matériaux. Selon ce deuxième mode d'ancrage, les moyens d'ancrage comprennent une rondelle déformable ayant des dents agencées pour mordre dans la paroi du puits sans créer de tensions circonférentielles dans le matériau de la paroi du puits. Ce mode d'ancrage présente cependant l'inconvénient de nécessiter de fixer une pièce supplémentaire sur l'insert tubulaire, ce qui est relativement coûteux.

Un but de l'invention est de fournir un moyen pour ancrer un insert dans le corps d'un élément en limitant les contraintes s'exerçant sur le corps.

A cet effet, on prévoit, selon l'invention, un élément de circuit de transport de fluide, comprenant un corps pourvu d'un canal ayant une portion d'extrémité et un insert tubulaire de raccordement qui est reçu dans ladite portion d'extrémité et qui est pourvu intérieurement de moyens de retenue étanche d'un tube et extérieurement de dents d'ancrage, caractérisé en ce que la portion d'extrémité du canal a un axe central et est délimitée par une paroi comportant au moins une première portion axiale relativement proche de l'axe central et une deuxième portion axiale relativement éloignée de l'axe central de sorte que les dents exercent un effort d'ancrage sur la première portion et n'exercent pas d'effort d'ancrage sur la deuxième portion axiale.

Ainsi, les contraintes exercées par les dents sur le matériau du corps sont relativement limitées et le risque d'une détérioration du corps de l'élément est éloigné.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue en coupe longitudinale d'un élément de circuit selon un premier mode de réalisation de l'invention, l'insert tubulaire de raccordement n'étant pas encore introduit dans le corps de l'élément,
- la figure 2 est une vue en coupe selon la ligne II-II de la figure 1,
- la figure 3 est une vue de détail de la figure 1, l'insert tubulaire de raccordement introduit dans le corps de l'élément,
- les figures 4, 5, 6 sont des vues partielles, analogues à la figure 2, de variantes du premier mode de réalisation,
- la figure 7 est une vue en coupe longitudinale du corps d'un élément de circuit selon un deuxième mode de réalisation de l'invention,
- la figure 8 est une vue en coupe selon la ligne VIII-VIII de la figure 7.

L'élément de circuit de transport de fluide selon l'invention est un élément émetteur ou récepteur de fluide. Cet élément est destiné à être relié au reste du circuit de fluide par un tube raccordé à l'élément.

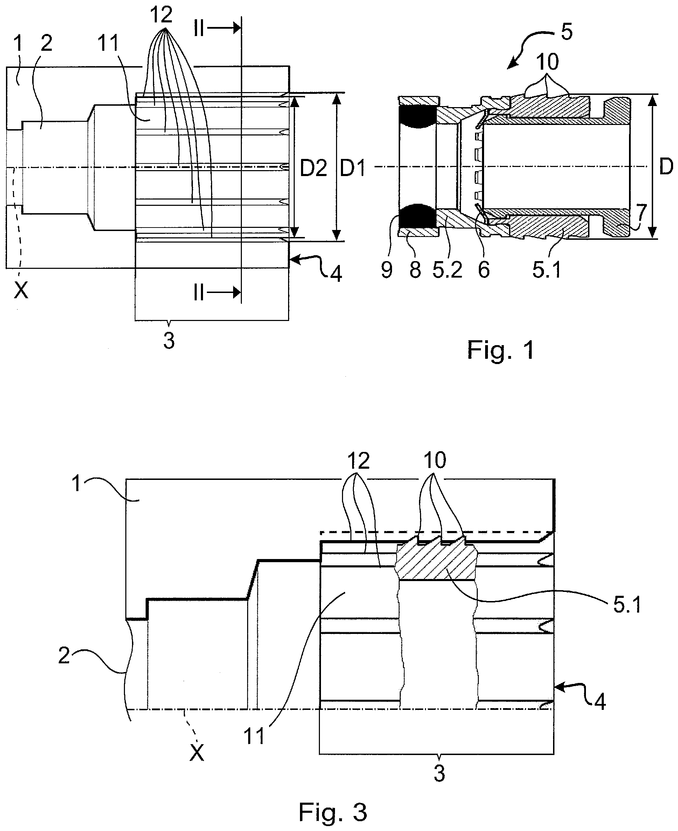

En référence aux figures 1 à 3, l'élément selon le premier mode de réalisation de l'invention comprend un corps 1 dans lequel a été ménagé un canal 2 ayant un tronçon d'extrémité 3 débouchant sur une face 4 du corps 1. Le corps 1 de l'élément est ici en matériau plastique et plus particulièrement thermoplastique.

Le tronçon d'extrémité 3 reçoit un insert tubulaire de raccordement généralement désigné en 5. L'insert tubulaire 5, connu en lui-même, est ici réalisé en deux tronçons 5.1, 5.2 fixés l'un à l'autre par une extrémité et entre lesquels est logée une rondelle d'accrochage 6 ayant sa circonférence interne divisée en dents. Le tronçon 5.1 reçoit à coulissement un poussoir de déconnexion 7 et le tronçon 5.2 comporte une extrémité libre pourvue d'une bague escamotable 8 recevant un joint d'étanchéité 9. Le tronçon 5.2 est ici en matériau thermoplastique et a, à l'opposé de la bague escamotable 8, son extrémité engagée à force sur le tronçon 5.1.

Le tronçon 5.1 est ici en métal et est pourvu extérieurement de dents d'ancrage 10 ici rigides. Les dents d'ancrage 10 définissent un diamètre d'ancrage D.

Le tronçon d'extrémité 3 du canal 2 a un axe central X et est délimité par une paroi cylindrique 11 ayant un diamètre D1 supérieur au diamètre d'ancrage D. Des nervures axiales 12 s'étendent en saillie de la paroi cylindrique 11 vers l'axe central X. Les nervures axiales 12 ont une section transversale présentant un contour sensiblement en demi-cercle. Les nervures axiales 12 définissent une section de passage ayant un diamètre D2 inférieur au diamètre d'ancrage D. Les nervures axiales 12 forment des premières portions axiales relativement proches de l'axe central X et les portions de paroi cylindrique 11 s'étendant entre les nervures axiales 12 forment des deuxièmes portions axiales relativement éloignée de l'axe central X.

On comprend que, lors de l'insertion de l'insert tubulaire 5 dans le tronçon d'extrémité 3, les dents d'ancrage 10 vont exercer un effort d'ancrage sur les premières portions axiales (les nervures axiales 12) et pas sur les deuxièmes portions axiales (les portions de paroi cylindrique 11). Ceci limite l'effort nécessaire à l'introduction de l'insert tubulaire dans le tronçon d'extrémité 3 et limitent également les contraintes appliquées au corps 1 de l'élément.

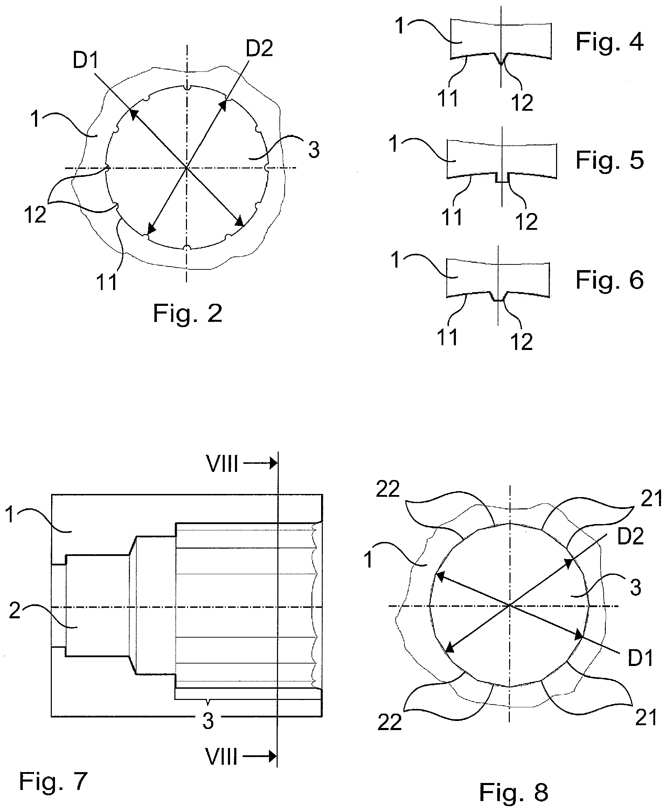

En variante, la section transversale des nervures axiales 12 peuvent avoir un contour sensiblement :
- triangulaire (figure 4),
- en quadrilatère (rectangulaire ou carré, figure 5),
- trapézoïdal à petite base orientée vers l'axe X (figure 6).

Les éléments identiques ou analogues à ceux précédemment décrits porteront la même référence numérique que ces derniers dans la description qui suit des figures 7 et 8 relatives au deuxième mode de réalisation.

L'élément selon le deuxième mode de réalisation de l'invention comprend, comme précédemment, un corps 1 dans lequel a été ménagé un canal 2 ayant un tronçon d'extrémité 3 débouchant sur une face 4 du corps 1.

Le tronçon d'extrémité 3 reçoit un insert tubulaire de raccordement, non visible sur les figures 7 et 8, identique à celui du premier mode de réalisation.

Selon le deuxième mode de réalisation, le tronçon d'extrémité 3 a une section transversale polygonale ayant des côtés 21, ici au nombre de seize, dont des portions centrales 22 délimitent une section de passage ayant un diamètre D2 inférieur au diamètre d'ancrage D et des angles délimitent une section de passage de diamètre D1 supérieur au diamètre d'ancrage D.

Les portions centrales 22 forment des premières portions axiales relativement proches de l'axe central X et les angles forment des deuxièmes portions axiales relativement éloignées de l'axe central X.

Comme précédemment, on comprend que, lors de l'insertion de l'insert tubulaire 5 dans le tronçon d'extrémité 3, les dents d'ancrage 10 vont exercer un effort d'ancrage sur les premières portions axiales et pas sur les deuxièmes portions axiales.

Bien entendu, l'invention n'est pas limitée aux modes de réalisation décrits mais englobe toute variante couverte par la définition de l'invention figurant dans les revendications.

En particulier, bien que le tronçon d'extrémité 3 ait été décrit avec des premières portions axiales et des deuxièmes portions axiales disposées symétriquement autour de l'axe central, les premières portions et les deuxièmes portions peuvent ne pas être symétriques. Le nombre de premières portions axiales du tronçon d'extrémité 3 sera déterminé en fonction de la résistance mécanique peut ne comprendre qu'une seule nervure

Les dents d'ancrage peuvent ne pas être rigides et peuvent être rapportées sur le corps de l'insert tubulaire de raccordement.

L'insert tubulaire de raccordement peut avoir un corps en une seule pièce et/ou comprendre un nombre différent de dents, par exemple une dent.

L'insert tubulaire de raccordement peut être en plastique rigide, par exemple en un matériau tel que le polysulfure de phénylène (PPS) incorporant des charges minérales.

Les moyens de retenue du tube peuvent avoir une structure différente et par exemple : ils peuvent comprendre une pince au lieu de la rondelle dentée ; ils peuvent être dépourvus de poussoir.

## Revendications

1. Elément de circuit de transport de fluide, comprenant un corps (1) pourvu d'un canal (2) ayant une portion d'extrémité (3) et un insert tubulaire (5) de raccordement qui est reçu dans ladite portion d'extrémité et qui est pourvu intérieurement de moyens (6, 9) de retenue étanche d'un tube et extérieurement de dents d'ancrage (10), **caractérisé en ce que** la portion d'extrémité du canal a un axe central (X) et est délimitée par une paroi comportant au moins une première portion axiale (12 ; 22) relativement proche de l'axe central et une deuxième portion axiale (11) relativement éloignée de l'axe central de sorte que les dents exercent un effort d'ancrage sur la première portion et n'exercent pas d'effort d'ancrage sur la deuxième portion axiale.

2. Elément selon la revendication 1, dans lequel la portion d'extrémité a une section polygonale ayant des côtés (21) dont des portions centrales formant des premières portions axiales (22) et les angles formant des deuxièmes portions axiales.

3. Elément selon la revendication 1, dans lequel la deuxième portion axiale (11) est en forme de portion axiale de cylindre et la première portion axiale (12) est en forme de nervure.

4. Elément selon l'une quelconque des revendications précédentes, dans lequel la portion d'extrémité comprend des premières portions axiales (12) et des deuxièmes portions axiales (11) disposées symétriquement autour de l'axe central (X).

5. Elément selon l'une quelconque des revendications précédentes, dans lequel l'insert (5) est en métal.

6. Elément selon l'une quelconque des revendications précédentes, dans lequel le corps (1) est en matière plastique.

7. Elément selon l'une quelconque des revendications précédentes, dans lequel les dents (10) sont rigides.

## Patentansprüche

1. Fluidtransportkreislaufelement, umfassend einen Körper (1), der mit einem Kanal (2) versehen ist, der einen Endabschnitt (3) und einen rohrförmigen Verbindungseinsatz (5) hat, der in dem genannten Endabschnitt aufgenommen und innen mit Mitteln (6, 9) zum dichten Halten eines Rohres und außen mit Verankerungszähnen (10) versehen ist, **dadurch gekennzeichnet, dass** der Endabschnitt des Kanals eine zentrale Achse (X) hat und von einer Wand begrenzt ist, die mindestens einen ersten axialen Abschnitt (12; 22) umfasst, der zur zentralen Achse relativ nahe ist, sowie einen zweiten axialen Abschnitt (11), der zur zentralen Achse relativ entfernt ist, sodass die Zähne eine Verankerungskraft auf den ersten Abschnitt ausüben und keine Verankerungskraft auf den zweiten axialen Abschnitt ausüben.

2. Element nach Anspruch 1, bei dem der Endabschnitt einen polygonalen Querschnitt mit Seiten (21) hat, deren zentrale Abschnitte erste axiale Abschnitte (22) bilden und deren Ecken zweite axiale Abschnitte bilden.

3. Element nach Anspruch 1, bei dem der zweite axiale Abschnitt (11) die Form eines axialen Zylinderabschnitts hat und der erste axiale Abschnitt (12) rippenförmig ist.

4. Element nach einem der vorhergehenden Ansprüche, bei dem der Endabschnitt erste axiale Abschnitte (12) und zweite axiale Abschnitte (11) hat, die symmetrisch um die zentrale Achse (X) angeordnet sind.

5. Element nach einem der vorhergehenden Ansprüche, bei dem der Einsatz (5) aus Metall ist.

6. Element nach einem der vorhergehenden Ansprüche, bei dem der Körper (1) aus Kunststoff ist.

7. Element nach einem der vorhergehenden Ansprüche, bei dem die Zähne (10) starr sind.

## Claims

1. Fluid transport circuit element, comprising a body (1) provided with a channel (2) having an end portion (3) and a tubular connection insert (5) which is received in said end portion and which is provided internally with means (6, 9) for sealingly retaining a tube and externally with anchoring teeth (10), **characterized in that** the end portion of the channel has a central axis (X) and is delimited by a wall including at least a first axial portion (12; 22) relatively close to the central axis and a second axial portion (11) relatively distant from the central axis so that the teeth exert an anchoring force on the first portion and do not exert any anchoring force on the second axial portion.

2. Element according to claim 1, wherein the end portion has a polygonal section having sides (21) including central portions forming first axial portions (22) and corners forming second axial portions.

3. Element according to claim 1, in which the second axial portion (11) is in the form of an axial cylinder portion and the first axial portion (12) is in the form of a rib.

4. Element according to any one of the preceding claims, in which the end portion comprises first axial portions (12) and second axial portions (11) disposed symmetrically around the central axis (X).

5. Element according to any one of the preceding claims, in which the insert (5) is made of metal.

6. Element according to any one of the preceding claims, in which the body (1) is made of plastic material.

7. Element according to any one of the preceding claims, in which the teeth (10) are rigid.
